# EUROPÄISCHE PATENTSCHRIFT

(11) **EP 3 364 092 B1**
(45) Veröffentlichungstag und Bekanntmachung des Hinweises auf die Patenterteilung: **22.04.2020**
(21) Anmeldenummer: 18405001.1
(22) Anmeldetag: 20.02.2018
(51) Int. Cl.: F16L 55/165, F16L 55/18

(54) **VORRICHTUNG UND EIN MIT DER VORRICHTUNG DURCHFÜHRBARES VERFAHREN ZUR HERSTELLUNG EINER AUSKLEIDUNG EINES ROHRS**
DEVICE AND A METHOD WHICH CAN BE IMPLEMENTED USING THE DEVICE TO CLAD A PIPE
DISPOSITIF ET PROCÉDÉ POUVANT ÊTRE MIS EN OEUVRE AVEC LEDIT DISPOSITIF POUR LA FABRICATION D'UN REVÊTEMENT D'UN TUYAU

(30) Priorität: 21.02.2017 CH 1992017
(43) Veröffentlichungstag der Anmeldung: 22.08.2018
(73) Patentinhaber: Bodus GmbH, 5000 Aarau (CH)
(72) Erfinder: Boller, Daniel, 5000 Aarau (CH)
(74) Vertreter: Isler, Jörg

(56) Entgegenhaltungen:
- DE-A1-102010 002 960
- JP-A- H08 164 560
- US-A1- 2008 236 692
- US-B1- 6 701 966

## Beschreibung

### Technisches Gebiet

Die vorliegende Erfindung betrifft eine Vorrichtung und ein mit der Vorrichtung durchführbares Verfahren zur Herstellung einer Auskleidung eines Rohrs, insbesondere eines eingebauten Rohrs über zumindest einen Abschnitt des Rohrs.

### Stand der Technik

Die DE102010002960 beschreibt eine Vorrichtung zur Auskleidung eines Rohrs mit einem Schlauch, wobei im Bereich des einen Endes des Schlauchs eine Verschlusskappe an einer ersten Oberfläche des Schlauchs fixiert ist, die den Schlauch an dessen Endes über seinen Querschnitt abdichtet. Die Verschlusskappe ist mit einer in sich geschlossenen, parallel zur ersten Oberfläche des Schlauchs angeordneten Verbindungsfläche fixiert, deren Kanten in einem Winkel von 30° bis 60° gegen die Längsachse des Schlauchs geneigt sind. Nachteilig an dieser Lösung ist, dass sich die Verschlusskappe schon beim Umstülpen oder Einbringen in das Rohr lösen kann oder undicht wird.

### Darstellung der Erfindung

Die Aufgabe der vorliegenden Erfindung liegt daher in der Bereitstellung einer verbesserten alternativen Vorrichtung und eines alternativen Verfahrens zur Herstellung einer Auskleidung eines Rohrs.

Erfindungsgemäss wird dies durch die Merkmale des ersten Anspruches erreicht.

Kern der Erfindung ist es also, dass im Bereich des zweiten Endes des Schlauchs eine Verschlusskappe angeordnet ist, dass die Verbindungsfläche zumindest einen ersten Bereich und einen zweiten Bereich aufweist, wobei sich die Verbindungsfläche in diesen Bereichen zumindest teilweise in unterschiedliche Richtungen erstreckt, und dass sich die Verbindungsfläche im ersten Bereich sich weiter zum ersten Ende des Schlauchs erstreckt als die Verbindungsfläche im zweiten Bereich, wobei die sich weiter zum ersten Ende des Schlauchs hin erstreckende Kante der Verbindungsfläche im ersten Bereich im Wesentlichen in einem Winkel α von 20 bis 80° gegen die Längsachse des Schlauchs geneigt ist und die Kante der Verbindungsfläche im zweiten Bereich im Wesentlichen in einem Winkel β von 110 bis 170° gegen die Längsachse des Schlauchs geneigt ist.

Die Vorteile der Erfindung sind unter anderem darin zu sehen, dass sich die Verschlusskappe nicht schon beim Umstülpen oder Einbringen in das Rohr lösen kann oder undicht wird und sich die Verschlusskappe trotzdem bei Bedarf einfach lösen lässt. Dadurch dass die Verbindungsfläche einen ersten Bereich und einen zweiten Bereich aufweist, wobei sich die Verbindungsfläche in diesen Bereichen zumindest teilweise in unterschiedliche Richtungen erstreckt, und dass sich die Verbindungsfläche im ersten Bereich weiter zum ersten Ende des Schlauchs erstreckt als die Verbindungsfläche im zweiten Bereich, wobei die Verbindungsfläche parallel zur ersten Oberfläche des Schlauchs angeordnet ist, wird beim Bewegen der Verschlusskappe entlang der Längsrichtung nicht die gesamte Verbindungsfläche auf einmal belastet, sondern nur jeweils ein Abschnitt der Verbindungsfläche entlang der Längsachse des Schlauchs. Durch den speziellen zweiten Bereich wird aber verhindert, dass sich die Verschlusskappe schon beim Umstülpen oder Einbringen in das Rohr löst oder undicht wird. Besonders vorteilhaft ist es, wenn sich die Verbindungsfläche in den zwei Bereichen in unterschiedliche Richtungen erstreckt

Weitere vorteilhafte Ausgestaltungen der Erfindung ergeben sich aus den abhängigen Patentansprüchen.

So ist es besonders vorteilhaft die Kante der Verbindungsfläche im ersten Bereich schlangenlinienförmig auszubilden. Die generelle Richtung der Schlangenlinie verläuft dabei im Wesentlichen entlang einer Hilfslinie im ersten Bereich.

Die Verschlusskappe ist über den Querschnitt am zweiten Ende des Schlauchs auf der ersten Oberfläche des Schlauchs fixiert, die nach Anordnung des Schlauchs innerhalb eines Rohrs die Innenseite des Schlauchs bzw. der Auskleidung bildet. Die Verschlusskappe erstreckt sich vorzugsweise über das zweite Ende des Schlauchs hinaus und ist vorzugsweise bis in den inneren Radius des Schlauchs verformbar. Die Verschlusskappe verschliesst den Querschnitt des Schlauchs einseitig an seinem zweiten Ende und ist beispielsweise nicht Teil eines Kalibrierschlauchs. Jedoch kann auch ein Kalibrierschlauch verwendet werden, der dann vorzugsweise mit der Verschlusskappe in Wirkverbindung steht. Die Verschlusskappe ist erfindungsgemäss lösbar mit dem Schlauch verbunden, sodass die verformbare Verschlusskappe nach anhaften des Schlauchs im Rohr vom Schlauch entfernt werden kann.

Besonders bevorzugt weist die Verschlusskappe zum Beispiel im mit Druck beaufschlagten Zustand des Schlauchs einen im Wesentlichen kegelstumpfförmigen, kegelförmigen, halbkugelförmigen oder U-förmigen Querschnitt auf, und ist in einem Bereich angrenzend an ihre Kante mit der zweiten Oberfläche des Schlauchs verbunden. Vorzugsweise ist die Verschlusskappe über eine umfänglich geschlossene Verbindungsfläche mit der zweiten Oberfläche des Schlauchs verbunden, beispielsweise durch eine Naht, vorzugsweise durch eine Verklebung oder eine Klebfläche. Bevorzugt ist die Verschlusskappe mit einer Zugvorrichtung, insbesondere mit einem Seil oder Flachband verbunden, die sich längs des Schlauchs erstreckt, und nach Anordnung des Schlauchs in dem auszukleidenden Rohr innerhalb des Schlauchs erstreckt. Die Verschlusskappe kann beispielsweise eine Kunststofffolie aufweisen oder daraus bestehen, die wahlweise mit einer Gewebeverstärkung versehen ist. Die Verschlusskappe kann jedoch auch aus dem gleichen oder einem ähnlichen Material wie der Schlauch bestehen.

Die erfindungsgemässe Vorrichtung weist daher auf oder besteht aus einem elastischen Schlauch, der mit einer härtbaren Kunstharzmischung imprägnierbar ist oder imprägniert werden kann, und ein erstes Ende und ein gegenüberliegenden zweites Ende hat, wobei der Schlauch von seinem ersten Ende her mit Druck beaufschlagbar ist, während das zweite Ende eine Verschlusskappe aufweist, die den Querschnitt des Schlauchs abdichtet, insbesondere gegen ein Medium bzw. Fluid abdichtet, das durch das erste Ende des Schlauchs unter Druck eingeführt wird. Dabei ist die Verschlusskappe lösbar an der ersten Oberfläche des Schlauchs fixiert und weist besonders bevorzugt eine Zugeinrichtung, beispielsweise ein Seil oder eine Flachbandschnur auf. Der Schlauch kann ein oder mehrschichtig sein und vorzugsweise aus einem gewebten oder ungewebten Gewebe, insbesondere aus einem Flies bestehen, das wahlweise auf der ersten Oberfläche eine fluiddichte Beschichtung aufweist, z. B. eine flüssigkeitsdichte Folie, ein Stützschlauch oder Kalibrierschlauch.

Die Härtung der härtbaren Kunstharzmischung kann kalt oder auch heiss erfolgen, insbesondere mit Dampf und bei Temperaturen bis zu 110°C.

Beim Verfahren zur Herstellung einer Rohrauskleidung weist der Schlauch an seinem zweiten Ende eine Verschlusskappe auf, die an der ersten Oberfläche des Schlauchs in einer im Wesentlichen um den Umfang des Schlauchs geschlossenen Verbindungsfläche fixiert ist,
der Schlauch wird in einem Rohr angeordnet, wobei die erste Oberfläche des Schlauchs ins Innere des Rohrs weist, während die gegenüberliegende zweite Oberfläche des Schlauchs an der Innenwandung des Rohrs anliegt. Nach dem Einbringen des Schlauchs in das Rohr kann das Innenvolumen des Schlauchs durch Zuführung eines Fluids durch das erste Ende des Schlauchs mit Druck beaufschlagt werden, da das dem ersten Ende gegenüberliegende zweite Ende des Schlauchs über den Querschnitt des Schlauchs durch die verformbare Verschlusskappe zumindest im Wesentlichen fluiddicht überdeckt ist. Besonders bevorzugt weist die verformbare Verschlusskappe eine Länge auf, sodass sie bei Druckbeaufschlagung des Innenvolumens des Schlauchs über das zweite Ende des Schlauchs hervorsteht. Damit wird nur ein Abschnitt am zweiten Ende der ersten Oberfläche des Schlauchs von der Verschlusskappe überdeckt bzw. gebildet, sodass ein Fluid, dass durch das erste Ende des Schlauchs eingeführt wird, unmittelbar gegen die erste Oberfläche des Schlauchs und gegen die entlang dessen Längsachse daran anschliessende verformbare Verschlusskappe wirkt und diese kontaktiert. Dies kann ohne im Schlauch angeordneten Stützschlauch oder Kalibrierschlauch erfolgen. Jedoch kann auch ein Stützschlauch oder Kalibrierschlauch verwendet werden.

Besonders bevorzugt wird die erfindungsgemässe Vorrichtung in ein auszukleidendes Rohr dadurch eingebracht, dass der Schlauch an seinem ersten Ende bis auf eine Zuführöffnung für ein Fluid und gegebenenfalls für die mit der Verschlusskappe verbundene Zugeinrichtung verschlossen ist und durch Druckbeaufschlagung gegen die erste Oberfläche des Schlauchs in herkömmlicher Weise unter Umstülpen in das Rohr eingebracht wird. Entsprechend bildet die erste Oberfläche des Schlauchs vor dem Einbringen in ein auszukleidendes Rohr die äussere Oberfläche, während die erste Oberfläche nach dem Einbringen des Schlauchs unter Umstülpen die zugängliche innere Oberfläche der Auskleidung bildet, während die zweite Oberfläche des Schlauchs gegen die Innenwandung des Rohrs anliegt.

Nach Verbindung der zweiten Oberfläche des Schlauchs mit dem auszukleidenden Rohr, vorzugsweise durch Aushärtung einer härtbaren Kunstharzmischung, wird erfindungsgemäss die Verschlusskappe entfernt, vorzugsweise durch Bewegen der Verschlusskappe durch den Schlauch in Richtung auf dessen erstes Ende, beispielsweise durch Ausüben von Zug auf eine Zugeinrichtung, die mit der Verschlusskappe verbunden ist.

### Kurze Beschreibung der Zeichnung

Im Folgenden werden anhand der Zeichnungen Ausführungsbeispiele der Erfindung näher erläutert. Funktionsgleiche Elemente sind in den verschiedenen Figuren mit den gleichen Bezugszeichen versehen.

Es zeigen:
- Fig. 1: eine erfindungsgemässe Vorrichtung,
- Fig. 2 und Fig. 3: schematisch den Ablauf des erfindungsgemässen Verfahrens mit der Vorrichtung,
- Fig. 4: einen Abschnitt einer weiteren erfindungsgemässen Vorrichtung mit Verschlusskappe,
- Fig. 5: einen Abschnitt der erfindungsgemässen Vorrichtung mit Verschlusskappe,
- Fig. 6: eine alternative Ausführungsform der erfindungsgemässen Vorrichtung und
- Fig. 7: eine weitere alternative Ausführungsform der erfindungsgemässen Vorrichtung.

Es sind nur die für das unmittelbare Verständnis der Erfindung wesentlichen Elemente gezeigt.

### Weg zur Ausführung der Erfindung

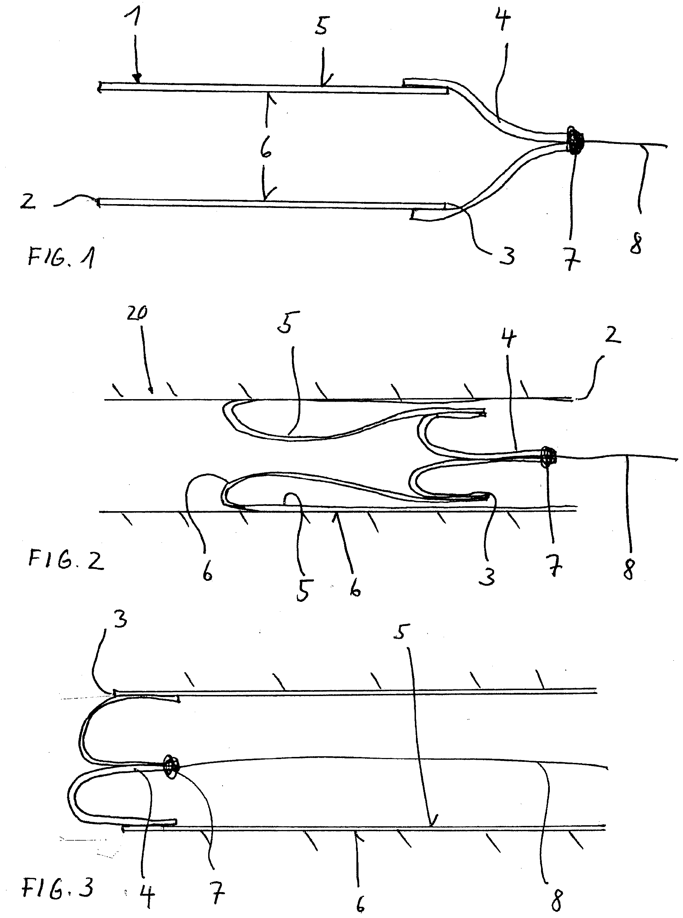

Fig. 1 zeigt eine erfindungsgemässe Vorrichtung im Schnitt, die einen Schlauch 1 mit einem ersten Ende 2 und einem zweiten Ende 3 enthält, sowie eine am zweiten Ende 3 angeordnete Verschlusskappe 4. Die Verschlusskappe 4 liegt abschnittsweise auf einer ersten Oberfläche 5 des Schlauchs 1 an und ist mit einer um den Umfang des Schlauchs 1 in sich im Wesentlichen geschlossenen Verbindungsfläche mit der ersten Oberfläche 5 verbunden. Die Verbindungsfläche mit der die Verschlusskappe 4 mit der ersten Oberfläche des Schlauchs verbunden ist, ist beispielsweise eine Naht, vorzugsweise jedoch eine Klebfläche. Als Klebstoff kann ein handelsüblicher für die zu verklebenden Materialien geeigneter Klebstoff verwendet werden, insbesondere ein Klebstoff auf Epoxidbasis.

Die der ersten Oberfläche 5 gegenüberliegende zweite Oberfläche 6 des Schlauchs 1 kann mit einem Klebstoff versehen sein, insbesondere mit einer aushärtbaren Kunstharzmischung, besonders bevorzugt einer aushärtbaren Epoxidharzmischung. Der Schlauch 1 besteht vorzugsweise aus einem gewebten oder nichtgewebtem Gewebe oder einem Flies und kann vorzugsweise elastisch sein. Auf seiner ersten Oberfläche 5 weist er besonders bevorzugt eine Schutzhülle, insbesondere eine Folie auf, die den Schlauch 1 oberflächlich abdichtet, z. B. gegen die Kunstharzmischung, mit der der Schlauch 1 imprägniert sein kann. Die Schutzhülle kann jedoch auch separat angeordnet sein, insbesondere als Kalibrierschlauch, so dass diese beim Entfernen der Verschlusskappe auch wieder entfernt werden kann. Der Klebstoff kann auch nachträglich in den Schlauch eingebracht werden, insbesondere indem er in das Schlauchmaterial eingepresst wird. Der Schlauch wird jedoch vorzugsweise vor dem Einbringen mit dem Klebstoff getränkt.

Die Verschlusskappe 4, die beispielsweise eine mit Gewebe armierte Kunststofffolie sein kann, überdeckt den lichten Querschnitt des zweiten Endes 3 des Schlauchs 1 vollständig. Die Verschlusskappe 4 kann beispielsweise schlauchförmig sein und entlang einer Kante an der ersten Oberfläche 5 des Schlauchs 1 anliegen, während die gegenüberliegende Kante der Verschlusskappe 4 geschlossen ist, beispielsweise mittels eines Verschlussmittels, insbesondere eines Knotens oder einer Schelle 7. Besonders bevorzugt ist an der Verschlusskappe 4 eine Zugeinrichtung 8 angeordnet, beispielsweise ein Draht, Kette oder Seil, vorzugsweise eine Flachband das z. B. vom Verschlussmittel 7 gehalten sein kann. Vorzugsweise wird das Ende der Verschlusskappe verknotet um den Knoten 7 zu formen, wobei dann an diesem Knoten die Zugeinrichtung angebracht wird.

Wie schematisch in Fig. 2 gezeigt ist, wird bevorzugt die erfindungsgemässe Vorrichtung dadurch in ein Rohr 20 eingeführt, dass die zweite Oberfläche 6 des Schlauchs 1 gegen die Innenwandung des Rohrs 20 angeordnet wird und die erste Oberfläche 5 des Schlauchs 1 mit Druck beaufschlagt wird, beispielsweise dadurch, dass das erste Ende 2 des Schlauchs 1 geschlossen wird (nicht gezeigt) und Luft oder ein Fluid gegen die erste Oberfläche 5 gepumpt wird, wobei die Luft oder ein Fluid über eine nicht gezeigte Öffnung eingebracht wird..

Zur Steuerung bzw. für ein möglichst faltenfreies Anliegen des Schlauchs 1 gegen die innere Oberfläche des Rohrs 20 ist bevorzugt, dass die Verschlusskappe 4 mittels der Zugeinrichtung 8 gegen die Bewegung in das Rohr 20 gebremst wird. Durch die Druckbeaufschlagung auf die erste Oberfläche 5 des Schlauchs 1 wird während des Anordnen des Schlauchs 1 im Rohr 20 der Schlauch 1 umgestülpt, sodass seine zweite Oberfläche 6 gegen die Innenwandung des Rohrs 20 angeordnet wird, während die erste Oberfläche 5 die neue innere Oberfläche der Rohrauskleidung, bzw. des ausgekleideten Rohrs 20 bildet.

Fig. 3 zeigt schematisch im Schnitt den Endpunkt der Anordnung des Schlauchs 1 im Rohr 20, bei dem die Druckbeaufschlagung gegen die erste Oberfläche 5 des Schlauchs 1 vorliegt und entsprechend die Verschlusskappe 4 ausdehnt und über das zweite Ende 3 des Schlauchs 1 hinaus aufpumpt. Durch die Erstreckung der Verschlusskappe 4 über das zweite Ende 3 des Schlauchs 1 hinaus liegt der Druck, mit dem die erste Oberfläche 5 des Schlauchs 1 beaufschlagt wird, auch gegen den Abschnitt der Verschlusskappe 4 an, in dem sich diese mit dem Schlauch 1 überdeckt, sodass der Druck auch auf das zweite Ende 3 des Schlauchs 1 wirkt und den Schlauch 1 im Bereich des zweiten Endes 3 vollständig gegen die Innenwandung des Rohrs 20 presst.

Nun wird der Klebstoff, welcher auf der zweiten Oberfläche 6 angeordnet ist, wobei der Schlauch vorzugsweise mit dem Klebstoff imprägniert ist oder der Klebstoff nachträglich eingebracht wurde, aushärten gelassen. Die Aushärtung kann durch einbringen von Wärme, vorzugsweise durch Einbringen von Dampf, beschleunigt werden. Dabei können Temperaturen von vorzugsweise bis zu 80°C, insbesondere von bis zu 110°C verwendet werden. Der Schlauch 1 liegt nach dem Aushärten der Kunstharzmischung an der Innenwandung des Rohrs 20 an und ist am Rohr festgeklebt. Durch Bewegen der Zugeinrichtung 8 längs des Schlauchs 1 in Richtung auf dessen erstes Ende 2, bzw. von dessen zweiten Ende 3 weg, kann die Verschlusskappe 4 von der ersten Oberfläche 5 des Schlauchs 1 abgezogen werden.

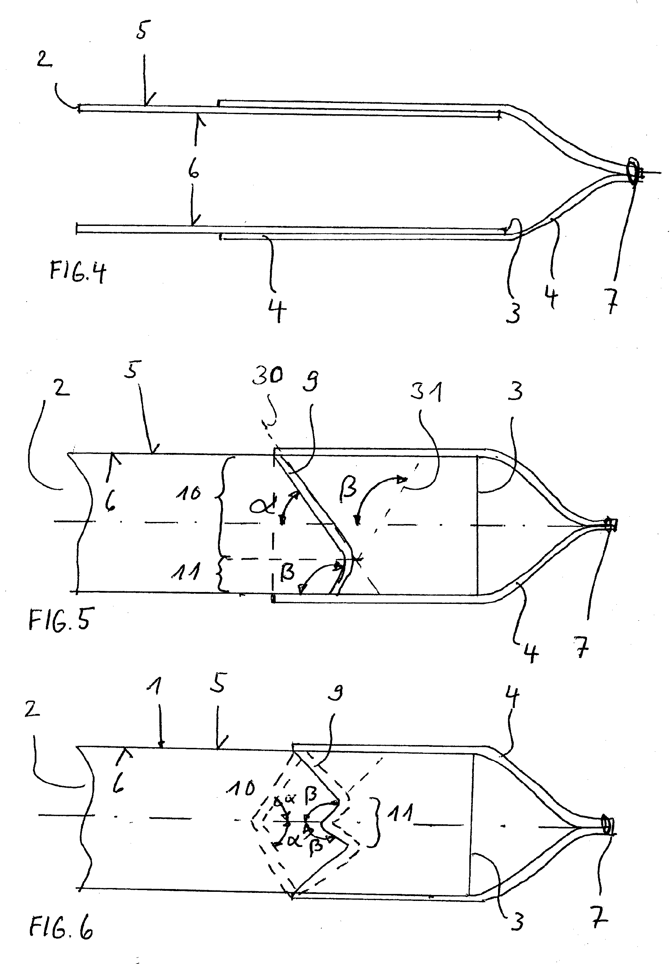

Fig. 4 zeigt als weitere mögliche Ausführungsform eine viel stärker überlappende Kappe. Diese hat den Vorteil, dass der Schlauch weniger genau abgemessen werden muss und die Kappe eine Stützfunktion übernimmt. Somit wird der Schlauch selbst wenn er über das Rohr hinausgeht, so durch die Kappe gestützt wird, dass er bei aufbringen von Druck nicht platzt. Die Überlappung kann dabei mindestens einen Meter betragen, vorzugsweise über 1.5 Meter.

Fig. 5 zeigt schematisch einen Ausschnitt einer erfindungsgemässen Vorrichtung, bei der ein Schlauch 1 in Aufsicht gezeigt, ist, während die Verschlusskappe 4 im Schnitt gezeigt ist. Zwischen der ersten Oberfläche 5 des Schlauchs 1 und der an dieser anliegenden Oberfläche der Verschlusskappe 4 ist eine Verbindungsfläche 9 gezeigt, die vorzugsweise einen umfänglich im Wesentlichen geschlossenen streifenförmigen Bereich über die erste Oberfläche 5 des Schlauchs 1 bildet. Die streifenförmige Verbindungsfläche hat bevorzugt eine Breite von 1 bis 8 cm, besonders bevorzugt von 1 bis 5 cm, insbesondere von 2 bis 4 cm.
Die Verbindungsfläche 9 weist dabei einen ersten Bereich 10 und einen zweiten Bereich 11 auf.
Die Kanten der Verbindungsfläche 9 verlaufen im ersten Bereich 10 im Wesentlichen in einem Winkel α von 20 bis 80°, bevorzugt 30 bis 70°, insbesondere 30 bis 60°, gegen die Längsachse des Schlauchs 1. Der Winkel α wird mittels einer Hilfslinie 30 die entlang der Kante verläuft ermittelt. Die Kanten der Verbindungsfläche 9 verlaufen im zweiten Bereich 11 im Wesentlichen in einem Winkel β von 110 bis 170°, bevorzugt 120 bis 160°, insbesondere 120 bis 150° gegen die Längsachse des Schlauchs 1, wenn der Winkel gleichartig gemessen wird wie im ersten Klebebereich 10. Der Winkel β wird mittels einer Hilfslinie 31 die entlang der Kante verläuft ermittelt. Die Kantenlänge des zweiten Bereiches 11 ist dabei jedoch kürzer als die Kantenlänge des ersten Bereiches 10. Die Verbindungsfläche 9 im ersten Bereich 10 erstreckt sich somit weiter zum ersten Ende 2 des Schlauchs als die Verbindungsfläche im zweiten Bereich 11. Im zweiten Bereich verläuft somit die Kante der Verbindungsfläche gegenläufig zur Kante im ersten Bereich 10 und es bildet sich eine Art vorspringende Nase.

Fig. 6 zeigt eine gegenüber der Fig. 5 bevorzugte Ausführungsform der Verschlusskappe 4. Zu beachten ist hier, dass der Schlauch im Gegensatz zu Fig. 5 um 90° gedreht dargestellt ist. Dadurch wird der im Bereich 11 gebildete Vorsprung, der nasenförmig ist, nicht in der Seitenansicht sondern in der Draufsicht dargestellt und die Nase ist besser sichtbar.
Im Gegensatz zu der Ausführungsform in Fig. 5 wird hier die Verschlusskappe 4 so ausgestaltet, dass diese an den Kanten des Klebebereiches abgeschnitten wird. Die Enden der Verschlusskanten verlaufen somit im Wesentlichen entlang der Kanten des Klebebereiches 9. Vorteil dieser Lösung ist, dass die Verschlusskappe vorkonfektioniert werden kann, der Klebstoff auf die Enden der Verschlusskappe aufgebracht werden kann und diese dann so am Schlauch befestigt wird.

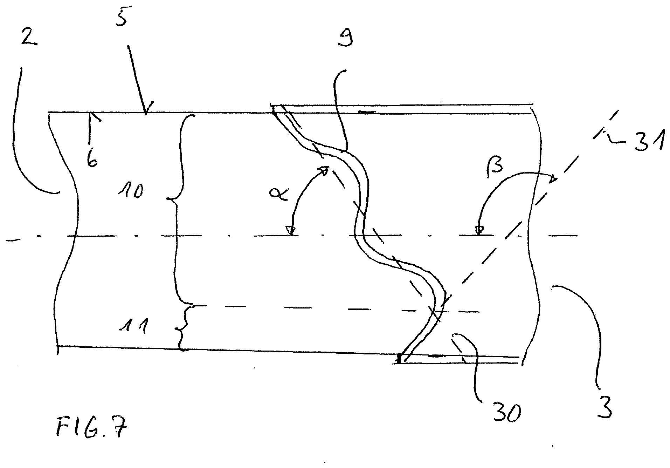

Fig. 7 zeigt schematisch einen Ausschnitt einer weiteren erfindungsgemässen Vorrichtung, bei der ein Schlauch 1 in Aufsicht gezeigt, ist, während die Verschlusskappe 4 im Schnitt gezeigt ist. Zwischen der ersten Oberfläche 5 des Schlauchs 1 und der an dieser anliegenden Oberfläche der Verschlusskappe 4 ist eine Verbindungsfläche 9 gezeigt, die einen umfänglich im Wesentlichen geschlossenen streifenförmigen Bereich über die erste Oberfläche 5 des Schlauchs 1 bildet. Die streifenförmige Verbindungsfläche hat bevorzugt eine Breite von 1 bis 8 cm, besonders bevorzugt von 1 bis 5 cm, insbesondere von 2 bis 4 cm.
Die Verbindungsfläche 9 weist dabei einen ersten Bereich 10 und einen zweiten Bereich 11 auf.
Die Kanten der Verbindungsfläche 9 verlaufen im zweiten Bereich 11 im Wesentlichen in einem Winkel β von 110 bis 170°, bevorzugt 120 bis 160°, insbesondere 120 bis 150° gegen die Längsachse des Schlauchs 1, wenn der Winkel gleichartig gemessen wird wie im ersten Klebebereich 10. Der Winkel β wird mittels einer Hilfslinie 31 die entlang der Kante verläuft ermittelt.
Die Kanten der Verbindungsfläche 9 verlaufen im ersten Bereich 10 im Wesentlichen in einer Schlangenlinie um die Hilfslinie 30. Auch hier wird die Ausrichtung der Schlangenlinie in einem Winkel α von 20 bis 80°, bevorzugt 30 bis 70°, insbesondere 30 bis 60°, gegen die Längsachse des Schlauchs 1 ausgeformt. Der Winkel α wird auch hier mittels einer Hilfslinie 30 ermittelt, die im Wesentlichen in der Richtung der Schlangenlinie verläuft. Vorzugsweise wird die Hilfslinie 30 so angeordnet, dass sich die Windungen gleichmässig verteilt auf beiden Seiten der Hilfslinie 30 befinden.
Dadurch dass die verlängerte Kante im Bereich 10 schlangenlinienförmig ausgestaltet ist, wird auch hier die Klebehaftung im Vergleich zur Ausführungsform nach Figur 5 und 6 vergrössert.
Die im Bereich 10 angeordnete schlangenlinienförmige Kante kann zahlreiche Windungen aufweisen, die gleichmässig sind jedoch auch ungleichmässig ausgestaltet werden können. Die schlangenlinienförmige Kante kann auch als Sinuskurve oder wie dargestellt durch Kreisabschnitte definiert werden. Insbesondere kann die Kurve durch Krümmungskreise definiert werden, wobei die schlangenlinienförmige Kante vorzugsweise mindestens 2 Krümmungskreise aufweist, besonders bevorzugt 3. Die schlangenlinienförmige Kante kann aber auch sehr viel mehr Windungen aufweisen, wesentlich ist, dass die Kante verlängert wird. Vorzugsweise befinden sich die Windungen auf beiden Seiten der Hilfslinie 30, um die Kraft vorteilhaft zu verteilen und ein frühzeitiges Abreissen der Kappe zu verhindern.

Selbstverständlich ist die Erfindung nicht auf das gezeigte und beschriebene Ausführungsbeispiel beschränkt. Der Klebebereich der Verbindungsfläche 9 kann auch nicht durchgängig ausgestaltet werden, bevorzugt ist jedoch eine durchgängige Verklebung, die dicht abschliesst. Der Klebebereich der Verbindungsfläche 9 in der Fig. 7 kann auch wie in Fig. 5 dargestellt mit überlappenden Bereichen ausgestaltet werden.
Auch können mehrere Bereiche als der erste Bereich (10) und der zweite Bereich (11) ausgebildet werden.

### Bezugszeichenliste

- 1: Schlauch
- 2: erstes Ende
- 3: zweites Ende
- 4: Verschlusskappe
- 5: erste Oberfläche
- 6: zweite Oberfläche
- 7: Schelle
- 8: Zugeinrichtung
- 9: Verbindungsfläche
- 10: erster Bereich Verbindungsfläche
- 11: zweiter Bereich Verbindungsfläche
- 20: Rohr
- 30: Hilfslinie
- 31: Hilfslinie
- α: Winkel erster Bereich
- β: Winkel zweiter Bereich

## Patentansprüche

1. Vorrichtung zur Auskleidung eines Rohrs (20), die einen Schlauch (1) mit einem ersten Ende (2) und einem gegenüberliegenden zweiten Ende (3) aufweist, wobei im Bereich des zweiten Endes (3) des Schlauchs (1) eine Verschlusskappe (4) an einer ersten Oberfläche (5) des Schlauchs (1) mittels einer in sich im Wesentlichen geschlossenen Verbindungsfläche (9) angeordnet ist,
wobei die Verbindungsfläche (9) zumindest einen ersten Bereich (10) und einen zweiten Bereich (11) aufweist, wobei sich die Verbindungsfläche (9) in diesen Bereichen zumindest teilweise in unterschiedliche Richtungen erstreckt, und wobei die Verbindungsfläche (9) im ersten Bereich (10) sich weiter zum ersten Ende (2) des Schlauchs (1) erstreckt als die Verbindungsfläche (9) im zweiten Bereich (11), **dadurch gekennzeichnet, dass** die sich weiter zum ersten Ende (2) des Schlauchs (1) hin erstreckende Kante der Verbindungsfläche (9) im ersten Bereich (10) im Wesentlichen in einem Winkel α von 20 bis 80° gegen die Längsachse des Schlauchs (1) geneigt ist und dass die Kante der Verbindungsfläche (9) im zweiten Bereich (11) im Wesentlichen in einem Winkel β von 110 bis 170° gegen die Längsachse des Schlauchs (1) geneigt ist.

2. Vorrichtung nach Anspruch 1, **dadurch gekennzeichnet, dass** die Kante der Verbindungsflächen (9) sich in diesen Bereichen zumindest teilweise in unterschiedliche Richtungen erstreckt und / oder dass die Kantenlänge der Verbindungsfläche (9) im zweiten Bereich (11) kürzer ist als die Kantenlänge der Verbindungsfläche (9) im ersten Bereich (10)

3. Vorrichtung nach einem der voranstehenden Ansprüche, **dadurch gekennzeichnet, dass** die Kante der Verbindungsfläche (9) im ersten Bereich (10) schlangenlinienförmig ausgebildet ist, und / oder insbesondere schlangenlinienförmig um eine Hilfslinie (30) ausgebildet ist, wobei die Hilfslinie (30) bevorzugt in einem Winkel α von 20 bis 80° gegen die Längsachse des Schlauchs (1) zum ersten Ende (2) des Schlauchs (1) geneigt ist.

4. Vorrichtung nach Anspruch 3, **dadurch gekennzeichnet, dass** die schlangenlinienförmige Kante der Verbindungsfläche (9) im ersten Bereich (10) mehrere Windungen aufweist, insbesondere durch mehrere Kreisabschnitte ausgebildet und / oder als Sinuskurve ausgebildet wird.

5. Vorrichtung nach einem der voranstehenden Ansprüche, **dadurch gekennzeichnet, dass** eine Zugeinrichtung (8) an der Verschlusskappe (4) fixiert ist und / oder dass die Verbindungsfläche (9) den Schlauch (1) an dessen zweitem Ende (3) über seinen Querschnitt abdichtet.

6. Vorrichtung nach einem der voranstehenden Ansprüche, **dadurch gekennzeichnet, dass** die erste Oberfläche (5) des Schlauchs (1) mit einer Schutzhülle beschichtet ist, oder dass eine Schutzhülle oder ein Kalibrierschlauch angeordnet ist.

7. Vorrichtung nach einem der voranstehenden Ansprüche, **dadurch gekennzeichnet, dass** die zweite Oberfläche (6) des Schlauchs (1) mit härtbarer Kunstharzmischung versehen ist,

8. Vorrichtung nach einem der voranstehenden Ansprüche, **dadurch gekennzeichnet, dass** die Verschlusskappe (4) sich an die erste Oberfläche (5) des Schlauchs (1) anschliesst und sich bei Druckbeaufschlagung gegen die erste Oberfläche (5) über das zweite Ende (3) des Schlauchs (1) hinaus erstreckt.

9. Verfahren zur Herstellung einer Rohrauskleidung umfassend:
Bereitstellen eines Schlauchs (1) mit einem ersten Ende (2) und einem gegenüberliegenden zweiten Ende (3),
Anordnen des Schlauchs (1) in einem Rohr (20), wobei eine zweite Oberfläche (6) des Schlauchs (1) gegen die innere Oberfläche des Rohrs (20) und eine erste Oberfläche (5) des Schlauchs (1) ins Innere des Rohrs (20) angeordnet wird,
wobei am zweiten Ende (3) des Schlauchs (1) eine Verschlusskappe (4) angeordnet ist, die im Bereich des zweiten Endes (3) an der ersten Oberfläche (5) des Schlauchs (1) angeordnet ist, und die Verschlusskappe (4) nach Anhaften des Schlauchs (1) an das Rohr (20) entfernt wird, wobei
die Verschlusskappe (4) im Bereich des zweiten Endes (3) des Schlauchs (1) an der ersten Oberfläche (5) mittels einer in sich im Wesentlichen geschlossenen Verbindungsfläche (9) angeordnet ist, wobei die Verbindungsfläche (9) zumindest einen ersten Bereich (10) und einen zweiten Bereich (11) aufweist, wobei sich die Verbindungsfläche (9) in diesen Bereichen zumindest teilweise in unterschiedliche Richtungen erstreckt,
wobei die Verbindungsfläche (9) im ersten Bereich (10) sich weiter zum ersten Ende (2) des Schlauchs (1) erstreckt als die Verbindungsfläche (9) im zweiten Bereich (11),
wobei die sich weiter zum ersten Ende (2) des Schlauchs (1) hin erstreckende Kante der Verbindungsfläche (9) im ersten Bereich (10) im Wesentlichen in einem Winkel α von 20 bis 80° gegen die Längsachse des Schlauchs (1) geneigt ist und wobei die Kante der Verbindungsfläche (9) im zweiten Bereich (11) im Wesentlichen in einem Winkel β von 110 bis 170° gegen die Längsachse des Schlauchs (1) geneigt ist.

10. Verfahren nach Anspruch 9, **dadurch gekennzeichnet, dass** das Anordnen des Schlauchs (1) in das Rohr (20) durch Anordnen der zweiten Oberfläche (6) des Schlauchs (1) gegen die innere Oberfläche des Rohrs (20) und Umstülpen des Schlauchs (1) und Bewegen des zweiten Endes (3) des Schlauchs 1 (1) längs des Rohrs (20) erfolgt.

11. Verfahren nach einem Ansprüche 9 oder 10, **dadurch gekennzeichnet, dass** die erste Oberfläche (5) des Schlauchs (1) mit Druck beaufschlagt wird.

12. Verfahren nach einem der Ansprüche 9 bis 11, **dadurch gekennzeichnet, dass** die Verschlusskappe (4) durch Bewegen einer an der Verschlusskappe (4) angeordneten Zugeinrichtung (8) längs des Schlauchs (1) in Richtung auf dessen erstes Ende (2) entfernt wird.

13. Verfahren nach einem der Ansprüche 9 bis 12, **dadurch gekennzeichnet, dass** das Anhaften des Schlauchs (1) an das Rohr (20) mittels eines Klebstoffes erfolgt, wobei der Schlauch vor dem Einbringen mit dem Klebstoff imprägniert wird, vorzugsweise wird der Klebstoff mittels Dampf ausgehärtet.

14. Verfahren nach einem der Ansprüche 9 bis 13, **dadurch gekennzeichnet, dass** die Kante der Verbindungsfläche (9) im ersten Bereich (10) schlangenlinienförmig ausgebildet ist, und / oder insbesondere schlangenlinienförmig um eine Hilfslinie (30) ausgebildet ist, wobei die Hilfslinie (30) bevorzugt in einem Winkel α von 20 bis 80° gegen die Längsachse des Schlauchs (1) zum ersten Ende (2) des Schlauchs (1) geneigt ist.

## Claims

1. A device for lining a pipe (20), comprising a hose (1) having a first end (2) and an opposite second end (3), wherein
in the area of the second end (3) of the hose (1) a locking cap (4) is arranged at a first surface (5) of the hose (1) by means of an essentially self-contained connection surface (9),
wherein
the connection surface (9) comprises at least a first area (10) and a second area (11), the connection surface (9) extending in these areas at least partially in different directions, and the connection surface (9) in the first area (10) extending further towards the first end (2) of the hose (1) than the connection surface (9) in the second area (11),
**characterized in that** the edge of the connection surface (9) in the first area (10) extending further to the first end (2) of the hose (1) is inclined essentially at an angle α of 20 to 80° against the longitudinal axis of the hose (1) and that the edge of the connection surface (9) in the second area (11) is inclined essentially at an angle β of 110 to 170° against the longitudinal axis of the hose (1).

2. The device according to claim 1, **characterized in that** in these areas the edge of the connection surface (9) extends at least partially in different directions and/or that the edge length of the connection surface (9) in the second area (11) is shorter than the edge length of the connection surface (9) in the first area (10).

3. The device according to any one of the preceding claims, **characterized in that** the edge of the connection surface (9) in the first area (10) is shaped as a serpentine line, and/or is shaped in particular as a serpentine line around an auxiliary line (30), the auxiliary line (30) being preferably inclined towards the first end (2) of the hose (1) at an angle α of 20 to 80° against the longitudinal axis of the hose (1).

4. The device according to claim 3, **characterized in that** the serpentine-shaped edge of the connection surface (9) in the first area (10) comprises several windings, that it is in particular shaped by several circular segments and/or shaped as a sinusoidal curve.

5. The device according to any one of the preceding claims, **characterized in that** a traction means (8) is fastened on the locking cap (4) and/or that the connection surface (9) seals the hose (1) at the second end (3) of the latter across its cross section.

6. The device according to any one of the preceding claims, **characterized in that** the first surface (5) of the hose (1) is coated with a protective cover or that a protective cover or a calibration hose is arranged.

7. The device according to any one of the preceding claims, **characterized in that** the second surface (6) of the hose (1) is provided with a hardenable synthetic resin mixture.

8. The device according to any one of the preceding claims, **characterized in that** the locking cap (4) joins the first surface (5) of the hose (1) and when pressure is applied against the first surface (5) extends beyond the second end (3) of the hose (1).

9. A method for manufacturing a pipe lining including:
providing a hose (1) having a first end (2) and an opposite second end (3),
arranging the hose (1) in a pipe (20), a second surface (6) of the hose (1) being arranged against the inner surface of the pipe (20) and a first surface (5) of the hose (1) being arranged towards the inside of the pipe (20),
wherein a locking cap (4) is arranged at the second end (3) of the hose (1),
which cap is arranged in the area of the second end (3) at the first surface (5) of the hose (1), and the locking cap (4) is removed after adhesion of the hose (1) to the pipe (20), the locking cap (4) being arranged on the first surface (5) in the area of the second end (3) of the hose (1) by means of an essentially self-contained connection surface (9), the connection surface (9) comprising at least a first area (10) and a second area (11), the connection surface (9) extending in these areas at least partially in different directions, the connection surface (9) in the first area (10) extending further towards the first end (2) of the hose (1) than the connection surface (9) in the second area (11),
wherein the edge of the connection surface (9) in the first area (10) extending further towards the first end (2) of the hose (1) is inclined essentially at an angle α of 20 to 80° against the longitudinal axis of the hose (1) and wherein the edge of the connection surface (9) in the second area (11) is inclined essentially at an angle β of 110 to 170° against the longitudinal axis of the hose (1).

10. The method according to claim 9, **characterized in that** arranging the hose (1) in the pipe (20) is carried out by arranging the second surface (6) of the hose (1) against the inner surface of the pipe (20) and inverting the hose (1) and moving the second end (3) of the hose (1) along the pipe (20).

11. The method according to any one of claims 9 or 10, **characterized in that** the first surface (5) of the hose (1) is pressurized.

12. The method according to any one of claims 9 to 11, **characterized in that** the locking cap (4) is removed by moving a traction means (8) arranged on the locking cap (4) along the hose (1) in the the direction of the first end (2) of the latter.

13. A method according to any one of claims 9 to 12, **characterized in that** adhering the hose (1) to the pipe (20) is carried out by means of an adhesive, the hose being impregnated with the adhesive prior to inserting, preferably the adhesive is hardened by steam curing.

14. A method according to any one of claims 9 to 13, **characterized in that** the edge of the connection surface (9) in the first area (10) is shaped in a serpentine line, and/or is shaped in particular in a serpentine line around an auxiliary line (30), the auxiliary line (30) being preferably inclined towards the first end (2) of the hose (1) at an angle α of 20 to 80° against the longitudinal axis of the hose (1).

## Revendications

1. Dispositif pour le revêtement intérieur d'un tuyau (20), comportant un tube flexible (1) ayant une première extrémité (2) et une deuxième extrémité (3) opposées, dans lequel
au niveau de la deuxième extrémité (3) du tube flexible (1), un capuchon de fermeture (4) est disposé sur une première surface (5) du tube flexible (1) au moyen d'une surface de connexion (9) essentiellement fermée sur elle-même, dans lequel
la surface de connexion (9) comporte au moins une première zone (10) et une deuxième zone (11), la surface de connexion (9) s'étendant dans ces zones au moins partiellement dans des directions différentes, et la surface de connexion (9) dans la première zone (10) s'étendant plus loin vers la première extrémité (2) du tube flexible (1) que la surface de connexion (9) dans la deuxième zone (11),
**caractérisé en ce que** le bord de la surface de connexion (9) dans la première zone (10) s'étendant plus loin vers la première extrémité (2) du tube flexible (1) est essentiellement incliné d'un angle α de 20 à 80° par rapport à l'axe longitudinal du tube flexible (1) et que le bord de la surface de connexion (9) dans la deuxième zone (11) est essentiellement incliné d'un angle β de 110 à 170° par rapport à l'axe longitudinal du tube flexible (1).

2. Dispositif selon la revendication 1, **caractérisé en ce que**, dans ces zones, le bord de la surface de connexion (9) s'étend au moins partiellement dans des directions différentes et/ou que la longueur du bord de la surface de connexion (9) dans la deuxième zone (11) est plus courte que la longueur du bord de la surface de connexion (9) dans la première zone (10).

3. Dispositif selon l'une des revendications précédentes, **caractérisé en ce que** le bord de la surface de connexion (9) dans la première zone (10) est en forme de serpentin et/ou en particulier en forme de serpentin autour d'une ligne auxiliaire (30), la ligne auxiliaire (30) étant inclinée vers la première extrémité (2) du tube flexible (1) de préférence d'un angle α de 20 à 80° par rapport à l'axe longitudinal du tube flexible (1).

4. Dispositif selon la revendication 3, **caractérisé en ce que** le bord en forme de serpentin de la surface de connexion (9) dans la première zone (10) comporte plusieurs spires, est formé en particulier par plusieurs segments de cercle et/ou est formé en sinusoïde.

5. Dispositif selon l'une des revendications précédentes, **caractérisé en ce qu'**un moyen de traction (8) est fixé au capuchon de fermeture (4) et/ou que la surface de connexion (9) assure l'étanchéité du tube flexible (1) à la deuxième extrémité (3) de ce dernier à travers sa section transversale.

6. Dispositif selon l'une des revendications précédentes, **caractérisé en ce que** la première surface (5) du tube flexible (1) est recouverte d'une enveloppe protectrice ou qu'on a disposé une enveloppe protectrice ou un tuyau d'étalonnage.

7. Dispositif selon l'une des revendications précédentes, **caractérisé en ce que** la deuxième surface (6) du tube flexible (1) est pourvue d'un mélange durcissable de résine synthétique.

8. Dispositif selon l'une des revendications précédentes, **caractérisé en ce que** le capuchon de fermeture (4) se joint à la première surface (5) du tube flexible (1), et lors d'une application de pression contre la première surface (5) s'étend au-delà de la deuxième extrémité (3) du tube flexible (1).

9. Procédé de fabrication d'un revêtement intérieur de tuyau, incluant:
la fourniture d'un tube flexible (1) ayant une première extrémité (2) et une deuxième extrémité (3) opposées,
l'agencement du tube flexible (1) dans un tuyau (20), une deuxième surface (6) du tube flexible (1) étant agencée contre la surface intérieure du tuyau (20) et une première surface (5) du tube flexible (1) étant agencée vers l'intérieur du tuyau (20),
un capuchon de fermeture (4), qui est agencé au niveau de la deuxième extrémité (3) sur la première surface (5) du tube flexible (1), étant agencé sur la deuxième extrémité (3) du tube flexible (1), et le capuchon de fermeture (4) étant retiré après l'adhérence du tube flexible (1) au tuyau (20), le capuchon de fermeture (4) étant agencé au moyen d'une surface de connexion (9) essentiellement fermée sur elle-même sur la première surface (5) au niveau de la deuxième extrémité (3) du tube flexible (1), la surface de connexion (9) comportant au moins une première zone (10) et une deuxième zone (11), la surface de connexion (9) s'étendant dans ces zones au moins partiellement dans des directions différentes, la surface de connexion (9) dans la première zone (10) s'étendant plus loin vers la première extrémité (2) du tube flexible (1) que la surface de connexion (9) dans la deuxième zone (11),
le bord de la surface de connexion (9) dans la première zone (10) s'étendant plus loin vers la première extrémité (2) du tube flexible (1) étant incliné essentiellement d'un angle α de 20 à 80° par rapport à l'axe longitudinal du tube flexible (1), et le bord de la surface de connexion (9) dans la deuxième zone (11) étant incliné essentiellement d'un angle β de 110 à 170° par rapport à l'axe longitudinal du tube flexible (1).

10. Procédé selon la revendication 9, **caractérisé en ce que** l'agencement du tube flexible (1) dans le tuyau (20) est effectué par l'agencement de la deuxième surface (6) du tube flexible (1) contre la surface intérieure du tuyau (20) et retournement du tube flexible (1) et déplacement de la deuxième extrémité (3) du tube flexible (1) le long du tuyau (20).

11. Procédé selon l'une des revendications 9 ou 10, **caractérisé en ce que** la première surface (5) du tube flexible (1) est mise sous pression.

12. Procédé selon l'une des revendications 9 à 11, **caractérisé en ce que** le capuchon de fermeture (4) est retiré par déplacement d'un moyen de traction (8) agencé sur le capuchon de fermeture (4) le long du tube flexible (1) en direction de la première extrémité (2) de celui-ci.

13. Procédé selon l'une des revendications 9 bis 12, **caractérisé en ce que** l'adhésion du tube flexible (1) sur le tuyau (20) s'effectue par l'intermédiaire d'un adhésif, le tube flexible étant imprégné de l'adhésif avant l'introduction, de préférence l'adhésif est durci par vapeur.

14. Procédé selon l'une des revendications 9 bis 13, **caractérisé en ce que** le bord de la surface de connexion (9) dans la première zone (10) est en forme de serpentin, et/ou notamment en forme de serpentin autour d'une ligne auxiliaire (30), la ligne auxiliaire (30) étant inclinée vers la première extrémité (2) du tube flexible (1) de préférence d'un angle α de 20 à 80° par rapport à l'axe longitudinal du tube flexible (1).
